# EUROPÄISCHE PATENTSCHRIFT

(11) **EP 4 163 235 B1**
(45) Veröffentlichungstag und Bekanntmachung des Hinweises auf die Patenterteilung: **13.08.2025**
(21) Anmeldenummer: 22199337.1
(22) Anmeldetag: 03.10.2022
(51) Int. Cl.: B65G 47/38

(54) **VORRICHTUNG ZUR ÜBERGABE VON FÖRDERGÜTERN ZWISCHEN ZWEI FÖRDERVORRICHTUNGEN SOWIE EIN FÖRDERSYSTEM UND EIN ÜBERGABEVERFAHREN**
DEVICE FOR TRANSFERRING TRANSPORTED GOODS BETWEEN TWO CONVEYOR DEVICES, A CONVEYOR SYSTEM AND A TRANSFER METHOD
DISPOSITIF DE TRANSFERT DE MARCHANDISES ENTRE DEUX DISPOSITIFS DE TRANSPORT AINSI QUE SYSTÈME DE TRANSPORT ET PROCÉDÉ DE TRANSFERT

(30) Priorität: 07.10.2021 CH 0703542021
(43) Veröffentlichungstag der Anmeldung: 12.04.2023
(60) Teilanmeldung: 25187782.5
(73) Patentinhaber: FERAG AG, 8340 Hinwil (CH)
(72) Erfinder: BRETZ, Markus, 8704 Herrliberg (CH); SCHNEIDER, Marcel, 6330 Cham (CH)
(74) Vertreter: Frei Patent Attorneys

(56) Entgegenhaltungen:
- WO-A1-2005/025764
- WO-A1-2021/252073
- DE-A1- 102005 031 493

## Beschreibung

Die Erfindung liegt auf dem Gebiet der Fördertechnik und betrifft eine Übergabevorrichtung zur Übergabe von Fördergütern von einem Zuförderer an einen Wegförderer gemäss dem Oberbegriff des Anspruchs 1 sowie ein Fördersystem mit einer Übergabevorrichtung und ein dazugehöriges Übergabeverfahren.

Durch den zunehmenden Online-Handel werden in Umschlagzentren immer grössere Mengen von Fördergütern, wie Pakete oder Beutelware, verarbeitet. Die grossen Mengen an Fördergütern sind eine grosse Herausforderung für die Umschlagzentren. So sollen die Fördergüter in den Umschlagzentren möglichst speditiv verarbeitet werden, damit diese ihren Empfänger schnellstmöglich erreichen.

In den Umschlagzentren werden die eintreffenden Fördergüter in Sortier- und Verteilsysteme eingespiesen. Hierzu werden die eintreffenden Fördergüter auf die Förderfläche eines Bereitstellungsförderers aufgelegt, welcher die Fördergüter einem Sorter zufördert und diesem übergibt.

Der Sorter kann beispielsweise als so genannter Kippschalenförderer ausgebildet sein, welcher zum Abgeben von Fördergütern kippbare Förderschalen aufweist. Mittels des Kippschalenförderers werden die Fördergüter in Kippschalen an Abgabestellen vorbei gefördert. Sobald das Fördergut die richtige Abgabestelle erreicht hat, wird die Kippschale über einen Kippmechanismus in eine Schrägstellung versetzt und die Fördergüter gleiten an der betreffenden Abgabestelle seitlich von der Förderschale ab.

Die Publikationsschrift WO 2021/252073 A1 beschreibt ein Sortiersystem mit einem Zwischenspeicher, der zwischen einer Rutsche, die Pakete liefert, und mehreren Rollwagen angeordnet ist. Der Zwischenspeicher sammelt vorübergehend Pakete an, um bei Überlaufbedingungen eine korrekte Paketlieferung an zugewiesene Rollwagen sicherzustellen. Der Zwischenspeicher umfasst hierzu ein horizontal bewegbares Auflageorgan.

Die Publikationsschrift WO 2005/025764 A1 beschreibt eine Vorrichtung zum Ordnen von flachen Sendungen nach einer festlegbaren Abfolge von den Empfängeradressen zugeordneten Zustellpunkten, mit mindestens einer Vereinzelungseinrichtung mit jeweils nachfolgender Leseeinrichtung zur Ermittlung der auf den Sendungen befindlichen Adressinformationen und mit einem umlaufenden Taschenring, in dessen gesteuert entleerbare Taschen jeweils eine gelesene Sendung befördert wird.

Die Publikationsschrift DE 10 2005 031493 A1 beschreibt eine Vorrichtung zur Ablage von Postsendungen aus einer ersten oberen Ablage in ein unteres Ablagefach. Die obere Ablage wird durch einen umlaufenden Flachriemen ausgebildet.

Es ist nun eine Aufgabe der vorliegenden Erfindung, ein Übergabevorrichtung vorzuschlagen, welche eine takt-synchrone Übergabe von Fördergütern von einem Zuförderer an einen Wegförderer ermöglicht. Gleichzeitig soll die Übergabevorrichtung möglichst einfach im Aufbau und platzsparend sein.

Ferner sollen mittels der Übergabevorrichtung einzelne Fördergüter auch kurzzeitig gepuffert, d.h. zwischengespeichert werden können, um eine takt-synchrone Übergabe an einen freien Förderplatz des Wegförderers zu gewährleisten.

Im Weiteren soll die Übergabevorrichtung eine möglichst schonende Übergabe der Fördergüter an den Wegförderer gewährleisten.

Wenigstens eine Aufgabe wird mit den Merkmalen der unabhängigen Ansprüche 1 und 14 gelöst. Die abhängigen Ansprüche sowie die Beschreibung und die Figuren beinhalten besondere Ausführungsformen und Weiterbildungen der Erfindung.

Die Erfindung betrifft also eine Übergabevorrichtung zur Übergabe von Fördergütern, wie Liegeware, von einem Zuförderer auf Förderplätze eines Wegförderers. Die Erfindung betrifft insbesondere eine Übergabevorrichtung zur Übergabe von Liegeware aus einem Warenstrom von einem Zuförderer auf Förderplätze eines Wegförderers.

Die Übergabevorrichtung bildet erfindungsgemäss einen ortsfesten Aufnahmeraum für mindestens ein Fördergut aus, welcher nach unten durch ein bewegbares Auflageorgan begrenzt ist. Das Auflageorgan ist mittels einer Bewegungseinrichtung zwischen einer Auflageposition, in welcher das mindestens eine Fördergut dem Auflageorgan im Aufnahmeraum flächig aufliegen kann und einer Abgabeposition, in welcher das Fördergut mittels Schwerkraft durch eine frei gegebene Übergabeöffnung aus dem Aufnahmeraum nach unten, auf einen unterhalb des Aufnahmeraums vorbei bewegten Förderplatz des Wegförderers fallen kann, bewegbar.

Das Fördergut wird also von der Übergabevorrichtung fallend an den Wegförderer übergeben.

Das mindestens eine Fördergut kann in der Abgabeposition mittels Schwerkraft durch eine vom Auflageorgan nach unten frei gegebene Übergabeöffnung nach unten, auf einen unterhalb des Aufnahmeraums vorbei bewegten Förderplatz des Wegförderers fallen.

Das Auflageorgan ist insbesondere seitlich, d.h. zur Seite hin aus der Auflageposition heraus und wieder seitlich, d.h. von der Seite, in die Auflageposition hinein bewegbar.

Gemäss einer Weiterbildung der Erfindung ist das Auflageorgan zwischen der Auflageposition und der Abgabeposition linear bewegbar. Das Auflageorgan kann insbesondere eine vor und zurück Bewegung ausführen.

Das Auflageorgan kann insbesondere als Schieberelement ausgebildet sein. Das Schieberelement ist insbesondere starr.

Gemäss einer Weiterbildung der Erfindung enthält die Bewegungseinrichtung zur Ausführung der linearen Bewegung des Auflageorgans einen mittels einer Steuerungseinrichtung ansteuerbaren Linearantrieb.

Der Linearantrieb ist insbesondere ein Pneumatikzylinder. Das Auflageorgan kann hierzu mit dem Zylinderkolben des Pneumatikzylinders gekoppelt sein. Die Hubbewegung des Zylinderkolben bewirkt dabei die lineare Bewegung des Auflageorgans. Der Pneumatikzylinder kann über Ventile, wie Öffnungs- und Schliessventile betätigt werden. Die Ventile werden durch die Steuerungseinrichtung angesteuert.

Der Pneumatikzylinder kann insbesondere ein doppeltwirkender Zylinder sein, bei welchem durch Druck auf der einen Wirkseite der Zylinderkolben ausgefahren und durch Druck auf der anderen Wirkseite wieder eingefahren wird.

Alternative Antriebe, wie Hydraulikzylinder oder Elektromotoren, z. B. Linearmotoren, zum Bewegen bzw. linearen Bewegen des Auflageorgans sind ebenfalls möglich.

Gemäss einer alternativen Ausführungsvariante wird das Auflageorgan durch einen Bandabschnitt eines flexiblen Bandes, welcher eine Auflagefläche für das Fördergut formt, ausgebildet. Der besagte Bandabschnitt, nachfolgend Auflagebandabschnitt genannt, zeichnet sich durch eine Auflagefläche für die Fördergüter aus, welche die Fördergüter zurückbehält.

Unter dem Begriff "Auflagefläche" ist allgemein die Oberfläche des Auflageorgans zu verstehen, welcher das Fördergut aufliegen kann. Die Auflagefläche kann, braucht aber nicht, eine durchgängige Fläche ausbilden. Die Auflagefläche kann vielmehr auch Unterbrüche oder Durchbrüche aufweisen.

Der Auflagebandabschnitt begrenzt in der Auflageposition den Aufnahmeraum gegen unten. Das flexible Band weist ferner insbesondere einen weiteren Bandabschnitt auf, welcher die Übergabeöffnung ausbildet. Durch Verschieben des flexiblen Bandes kann dieses nun abwechselnd mit seinem Auflagebandabschnitt oder mit seinem Bandabschnitt mit der Übergabeöffnung unterhalb des Aufnahmeraums angeordnet werden.

Hierzu kann das flexible Band mit jeweils einem ersten Ende an einer ersten Wickelrolle und mit dem zweiten Ende an einer zweiten Wickelrolle befestigt sein. Die Wickelrollen können durch einen entsprechenden Antrieb angetrieben werden.

Das Verschieben der Bandabschnitte bzw. des Auflagebandabschnittes unterhalb des Aufnahmeraumes kann nun durch Abwickeln eines Bandabschnittes von einer ersten Wickelrolle und gleichzeitigem Aufwickeln eines korrespondierenden Bandabschnittes an der zweiten Wickelrolle erfolgen. Die Gegenbewegung erfolgt durch eine Umkehrung des Ab- und Aufwickelvorganges.

Zum Aufspannen des entsprechenden Bandabschnittes unterhalb des Aufnahmeraumes sind seitliche Umlenkrollen angeordnet, welche das flexible Band in eine Umlenkung, insbesondere nach oben und insbesondere zu einer Wickelrolle hin führen. Es ist jedoch auch möglich, dass die Umlenkrollen durch die Wickelrollen selbst ausgebildet werden.

Durch den Ab- und Aufwickelvorgang lässt sich nun der Auflagebandabschnitt seitlich aus seiner Auflageposition heraus und gleichzeitig der Bandabschnitt mit der Übergabeöffnung seitlich in die Abgabeposition hinein bewegen. Mit entgegengesetzter Bewegungsrichtung lässt sich der Auflagebandabschnitt wieder seitlich in seine Auflageposition hinein und gleichzeitig der Bandabschnitt mit der Übergabeöffnung seitlich aus seiner Abgabeposition heraus bewegen.

Das flexible Band, insbesondere dessen Auflagebandabschnitt, kann z. B. ein Gewebeband sein. Das flexible Band, insbesondere dessen Auflagebandabschnitt kann ein gleichförmiges Kunststoffband, wie Gummiband sein. Das Band kann auch als dünnwandige, jedoch strapazierfähige Folie ausgelegt sein. Das flexible Band kann im Bandabschnitt mit der Übergabeöffnung auch nur aus einem oder mehreren, insbesondere seitlich angeordneten, dünnen Seilen, Schnüren oder Fäden bestehen. Dünne Seile, Schnüre oder Fäden können auch zur Verstärkung des flexiblen Bandes, insbesondere zur Verstärkung des Bandabschnittes mit der Übergabeöffnung, vorgesehen sein.

Die Übergabevorrichtung weist eine Zuführöffnung zur seitlichen Zuführung des Fördergutes zur Übergabevorrichtung bzw. in den Aufnahmeraum der Übergabevorrichtung auf. Das heisst die Zuführöffnung ist für die Zuführung des Fördergutes von der Seite ausgelegt. Die Zuführöffnung ist insbesondere zum seitlichen Aufgleiten des Fördergutes auf das Auflageorgan ausgelegt.

Gemäss einer ersten Ausführungsform ist die Zuführöffnung seitlich des sich in Auflageposition befindlichen Auflageorgans angeordnet. Das Fördergut kann so seitlich, d.h. von der Seite auf das Auflageorgan gefördert werden.

Die Übergabevorrichtung weist gemäss dieser Ausführungsform einen der Zuführöffnung gegenüberliegenden Anschlag zum Stoppen des auf das Auflageorgan geförderten Förderguts auf.

Gemäss einer zweiten Ausführungsform ist die Zuführöffnung über dem sich in Auflageposition befindlichen Auflageorgan angeordnet. Auch hier kann das Fördergut seitlich, das heisst von der Seite der Übergabevorrichtung zugefördert werden. Das Fördergut wird jedoch nicht seitlich auf das Auflageorgan gefördert, sondern fällt vielmehr durch die über dem Auflageorgan angeordnete Zuführöffnung auf das darunter in der Auflageposition befindliche Auflageorgan.

Die Auflagefläche des Auflageorgans in der Auflageposition kann horizontal sein. Gemäss dieser Ausführungsform trifft das bei der Übergabe nach unten fallende Fördergut insbesondere mit einer Flächenseite flächig auf den Förderplatz des Wegförderers.

Es ist jedoch auch denkbar, dass die Auflagefläche des Auflageorgans in der Auflageposition geneigt ist. Gemäss dieser Ausführungsform trifft das bei der Übergabe nach unten fallende Fördergut insbesondere zuerst mit einem Randabschnitt auf dem Förderplatz des Wegförderers auf und legt sich erst im Anschluss daran flächig auf den Förderplatz.

Die Auflagefläche kann insbesondere parallel zur Förderrichtung des Wegförderers geneigt sein. Die Auflagefläche kann insbesondere schräg nach unten zu den Förderplätzen des Wegförderers hin geneigt sein. Der Aufnahmeraum wird an der tief liegenden Kante bzw. am tief liegenden Ende der Auflagefläche insbesondere durch einen Anschlag, z. B. durch eine Wand, begrenzt.

Die Auflagefläche ist insbesondere in Förderrichtung des Zuförderers bzw. in Zuführrichtung schräg nach unten geneigt.

Eine geneigte Auflagefläche weist den Vorteil auf, dass das zugeführte Fördergut in Richtung des tief liegenden Endes der Auflagefläche rutscht und dort an einem Anschlag anschlägt. Dies garantiert eine definierte Lage des Fördergutes im Aufnahmeraum, was für eine präzise Übergabe des Fördergutes auf einen sich darunter befindlichen Förderplatz des Wegförderers wichtig ist. Dank der geneigten Auflagefläche nimmt das Fördergut diese definierte Lage im Wesentlichen unabhängig von der Zuführgeschwindigkeit ein. Dies ist beispielsweise bei einer horizontalen Auflagefläche nicht unbedingt der Fall.

Die Auflagefläche kann z.B. in Förderrichtung des Wegförderers schräg nach unten zu den Förderplätzen des Wegförderers hin geneigt sein. Die Auflagefläche kann alternativ auch entgegen der Förderrichtung des Wegförderers schräg nach unten zu den Förderplätzen des Wegförderers hin geneigt sein.

Ferner ist es auch denkbar, dass die Auflagefläche eine Neigung quer zur Förderrichtung des Wegförderers aufweist. So kann die Auflagefläche in Zuförderrichtung der Fördergüter schräg nach unten geneigt sein.

Bei einer Neigung der Auflagefläche sowohl quer als auch parallel zur Förderrichtung des Wegförderers kann eine Auflagefläche mit einer tief liegende Ecke ausgebildet werden, in welche das Fördergut rutscht. Dadurch lässt sich die Lage des Fördergutes im Aufnahmeraum noch genauer definieren, als wenn das Fördergut z. B. nur zu einer tief liegenden Kante rutscht.

Der Aufnahmeraum wird, mit Ausnahme einer gegebenenfalls vorhandenen, seitlichen Zuführöffnung, seitlich insbesondere durch Begrenzungselemente, wie starre oder flexible Wände, Streben, Gitter oder Netze begrenzt.

Wie oben bereits erwähnt wird bei geneigten Auflageflächen insbesondere an den tiefer liegenden Seiten des Aufnahmeraums eine Begrenzung in Form eines Anschlages ausgebildet, damit die Fördergüter nicht von der geneigten Auflagefläche abrutschen können.

Wird das Auflageorgan durch einen Bandabschnitt eines flexiblen Bandes ausgebildet, so kann auch das flexible Band bzw. können Bandabschnitte des über Umlenkrollen seitlich nach oben umgelenkten, flexiblen Bandes eine seitliche Begrenzung ausbilden.

Die Erfindung betrifft auch ein Fördersystem enthaltend einen Zuförderer, einen Wegförderer mit einer Mehrzahl von entlang einer Förderbahn bewegbaren Förderplätzen sowie enthaltend eine Übergabevorrichtung zur Übergabe von Fördergütern vom Zuförderer auf Förderplätze des Wegförderers wie oben beschrieben.

Das Fördersystem enthält insbesondere eine Steuerungseinrichtung, welche unter Berücksichtigung der Fallhöhe und der Fallgeschwindigkeit des mindestens einen Fördergutes während der Übergabe sowie unter Berücksichtigung der Position und Fördergeschwindigkeit der Förderplätze des Wegförderers zur takt-synchronen Übergabe von Fördergütern auf unterhalb des Aufnahmeraums vorbei bewegte Förderplätze des Wegförderers ausgelegt ist.

Erfindungsgemäss ist der ortsfeste bzw. stationäre Aufnahmeraum der Übergabevorrichtung über der Förderbahn des Wegförderers angeordnet, so dass das Fördergut in der Abgabeposition mittels Schwerkraft durch die frei gegebene Übergabeöffnung nach unten, auf einen unterhalb des Aufnahmeraums vorbei bewegten Förderplatz des Wegförderers fallen kann. Es ist insbesondere die Übergabevorrichtung als solche ortsfest bzw. stationär ausgebildet.

Der Aufnahmeraum ist insbesondere maximal 75 cm und ganz besonders maximal 50 cm oberhalb eines sich unter dem Aufnahmeraum befindlichen Förderplatzes des Wegförderers angeordnet. Die Höhe des Aufnahmeraums über dem Wegförderer wird insbesondere so gewählt, dass einerseits Fördergüter auf den Förderplätzen des Wegförderers unterhalb der Übergabevorrichtung hindurch gefördert werden können, und andererseits die zu übergebenden Fördergüter dennoch keine allzu grosse Fallhöhe ertragen müssen.

Der Wegförderer bildet insbesondere diskrete Förderplätze aus, auf welchen Fördergüter abgelegt werden können. Die diskreten Förderplätze werden beispielsweise durch einzelne Förderorgane eines Fördermittels ausgebildet.

Der Wegförderer kann ein Kettenförderer sein. Der Wegförderer kann eine angetriebene Förderkette umfassen, an welcher Fördermittel zum Fördern von Fördergütern angeordnet bzw. befestigt sind. Die Förderkette kann in einem Führungskanal geführt sein. Die Förderkette z. B. aus einzelnen, miteinander verketteten Förderwagen bestehen, welche z.B. entlang des Führungskanals rollend geführt sind.

Die Fördermittel können Förderorgane umfassen, welche Förderplätze, insbesondere diskrete Förderplätze, für Fördergüter ausbilden. Die Förderorgane können zum Beispiel Förderschalen, Förderplatten, Fördergurte, Fördertaschen, Förderkörbe, etc. sein.

Die Förderkette und mit dieser die Fördermittel können eine endlos umlaufende, geschlossene Schlaufe bilden. Die Förderkette kann auch durch die Fördermittel selbst ausgebildet sein, welche z. B. miteinander verkettete Förderelemente, wie Förderorgane der oben beschriebenen Art, umfassen.

Dank der direkten oder indirekten Verkettung der Förderorgane können eine synchrone Bewegung der Förderplätze sowie gleichbleibende Abstände zwischen den Förderplätzen gewährleistet werden.

So kann der Wegförderer ein Schalenförderer, wie Kippschalenförderer sein, bei welchem die Förderorgane durch entlang der Förderbahn hintereinander angeordnete Schalen bzw. Kippschalen ausgebildet werden. Kippschalen zeichnen sich dadurch aus, dass diese zur Seite kippbar sind, z. B. nur auf eine oder auf beide Seiten kippbar sind. Die Schalen sind insbesondere über eine angetriebene Förderkette, wie oben beschrieben, miteinander verbunden.

Der Wegförderer kann auch ein Quergurtförderer sein, bei welchem die Förderorgane durch antreibbare Quergurte ausgebildet werden, welche eine Förderfläche für das Fördergut ausbilden. Die Förderorgane mit den Quergurten sind insbesondere über eine angetriebene Förderkette, wie oben beschrieben, miteinander verbunden. Ein solcher Quergurtförderer wird beispielsweise in der DE 198 45 527 A1 beschrieben.

Es ist auch möglich, dass der Wegförderer ein flächiges, angetriebenes Förderorgan, wie Mattenkette, Förderband, oder Plattenkette, aufweist. Entsprechend kann der Wegförderer ein Mattenkettenförderer, Bandförderer oder Plattenkettenförderer sein.

Auf dem flächigen Förderorgan können in loser, d.h. nicht verbundener Art Förderhilfen, wie Förderschalen oder Förderbehälter, angeordnet sein bzw. aufliegen, welche diskrete Förderplätze ausbilden, und welche durch das Förderorgan transportiert werden.

Der Wegförderer kann auch ein Schuhförderer mit von der Seite quer über die Förderfläche bewegbaren Auswurfelementen sein. Ein Schuhförderer wird beispielsweise in der WO 2021/037609 A1 beschrieben.

Der Zuförderer kann ein Zwischenförderer sein oder einen solchen enthalten. Der Zwischenförderer fördert die Fördergüter insbesondere zwischen einem Bereitstellungsförderer und der Übergabevorrichtung. So kann der Zwischenförderer im Prozessablauf zwischen einem Bereitstellungsförderer und der Übergabevorrichtung angeordnet sein.

Der Zuförderer kann ein Bandförderer mit Förderband sein oder einen solchen enthalten. Der Zuförderer kann eine Förderrutsche sein oder eine solche enthalten. Der Zuförderer kann jedoch auch ein Bereitstellungsförderer, wie weiter unten beschrieben, sein oder einen solchen enthalten.

Die Übergabevorrichtung ist im Prozessablauf zwischen dem Zuförderer und dem Wegförderer angeordnet.

Der Zuförderer ist insbesondere zur seitlichen Zuführung der Fördergüter an die Übergabevorrichtung ausgelegt.

Der Zuförderer weist zur Zuführung der Fördergüter an die Übergabevorrichtung insbesondere mindestens eine Förderkomponente quer zur Förderrichtung des Wegförderers auf.

Der Zuförderer kann zur Zuführung der Fördergüter an die Übergabevorrichtung mindestens eine Förderkomponente parallel, insbesondere gleichgerichtet, zur Förderrichtung des Wegförderers, aufweisen.

Gemäss einer Weiterbildung des Fördersystems sind entlang der Förderbahn des Wegförderers mehrere Übergabevorrichtungen der oben beschriebenen, erfindungsgemässen Art angeordnet. Die Übergabevorrichtungen können jeweils von unterschiedlichen Bereitstellungsförderern gespiesen, d.h. mit Fördergütern beschickt werden. Die Übergabevorrichtungen können auch vom selben Bereitstellungsförderer gespiesen, d.h. mit Fördergütern beschickt werden.

Gemäss einer Weiterbildung der Erfindung ist das Fördersystem ein Sortiersystem zur gezielten Verteilung von Fördergütern.

Der Wegförderer ist insbesondere ein Sorter. Die Förderbahn des Wegförderers führt gemäss dieser Ausführungsvariante insbesondere durch einen Abgabebereich mit entlang der Förderbahn angeordneten Abgabestellen. Die Fördergüter werden an den Abgabestellen nach bestimmten Sortier- bzw. Verteilkriterien abgegeben.

So dient das Sortiersystem beispielsweise der Sortierung von Paketen, z. B. nach Zielort, Form (Geometrie), Grösse oder Gewicht.

Gemäss einer Weiterbildung der Erfindung ist das Fördersystem ein Kommissioniersystem zum Kommissionieren von Fördergütern gemäss Auftrag, wie Kundenauftrag. So dient das Kommissioniersystem z.B. dem Zusammenstellen von Artikeln von Kundenaufträgen, z. B. aus dem Online-Handel. Die Fördergüter entsprechen hier so genannten Kommissioniergütern.

Gemäss einer Weiterbildung der Erfindung ist entlang der Förderbahn des Wegförderers und in Förderrichtung des Wegförderers vor der Übergabevorrichtung eine Sensoreinrichtung zur Erfassung der Belegung bzw. Nichtbelegung der an der Sensoreinrichtung vorbei bewegten Förderplätze des Wegförderers angeordnet. Die Sensoreinrichtung kann z. B. einen optischen Sensor, wie Kamera oder Lichtschranke, umfassen.

Die Sensoreinrichtung ist mit der Steuerungseinrichtung verbunden und übermittelt die Informationen über die Belegung bzw. Nichtbelegung der Förderplätze des Wegförderers an die Steuerungseinrichtung.

So kann die Steuerungseinrichtung die Abgabe eines Fördergutes vom Bereitstellungsförderer an die Übergabevorrichtung davon abhängig machen, dass der Förderplatz auf dem Wegförderer, welcher dem zu übergebenden Fördergut zugeordnet wird, frei ist. Das heisst, die Steuerungseinrichtung gibt das Steuersignal zur Abgabe eines Fördergutes vom Bereitstellungsförderer an die Übergabevorrichtung nur, wenn diese auf Grundlage der von der Sensoreinrichtung übermittelten Belegungsinformation dem abzugebenden Fördergut einen freien Förderplatz auf dem Wegförderer zuordnen kann. Das heisst die Abgabe des Fördergutes vom Bereitstellungsförderer erfolgt in Abhängigkeit von einem freien Förderplatz auf dem Wegförderer.

Alternativ oder zusätzlich kann die Steuerungseinrichtung so ausgelegt sein, dass diese das Steuersignal zur Übergabe eines Fördergutes von der Übergabevorrichtung an den Wegförderer nur gibt, wenn diese auf Grundlage der von der Sensoreinrichtung übermittelten Belegungsinformation dem zu übergebenden Fördergut einen freien Förderplatz auf dem Wegförderer zuordnen kann. Das heisst die Übergabe des Fördergutes von der Übergabevorrichtung erfolgt in Abhängigkeit von einem freien Förderplatz auf dem Wegförderer.

Auf diese Weise wird verhindert, dass Fördergüter von der Übergabevorrichtung auf bereits belegte Förderplätze des Wegförderers übergeben werden.

Das Fördersystem kann im Weiteren einen Bereitstellungsförderer zur Abgabe von Fördergütern an den Zuförderer enthalten. Der Bereitstellungsförderer kann ein Förderer in der Art eines weiter oben im Zusammenhang mit dem Wegförderer beschrieben Fördertyps sein. So kann der Bereitstellungsförderer ein Schalenförderer, wie Kippschalenförderer, ein Taschenförderer, ein Quergurtförderer oder ein Schuhförderer sein.

Grundsätzlich kann auch der Zuförderer selbst als Bereitstellungsförderer ausgebildet sein. In diesem Fall werden die Fördergüter vom Bereitstellungsförderer direkt an die Übergabevorrichtung abgegeben.

Ein Bereitstellungsförderer in Form eines Kippschalenförderers gibt die Fördergüter an einer Abgabestelle mittels Kippen der Förderschalen an den Zuförderer ab.

Ein Bereitstellungsförderer in Form eines Taschenförderers mit hängend geförderten Fördertaschen gibt die Fördergüter an einer Abgabestelle mittels Kippen der Fördertaschen an den Zuförderer ab. Dies geschieht, indem der Taschenboden angehoben wird, so dass die Taschenöffnung nach unten weist und das Fördergut schwerkraftbedingt durch die Taschenöffnung aus der Fördertasche gleitet.

Alternativ können die Fördergüter die Fördertaschen auch seitlich oder durch sich öffnende Taschenböden verlassen.

Der Bereitstellungsförderer kann, insbesondere im Bereich der Abgabe der Fördergüter an den Zuförderer, oberhalb des bzw. über dem Wegförderer angeordnet sein. Der Bereitstellungsförderer kann den Wegförderer im Bereich der Abgabe bzw. Übergabe der Fördergüter kreuzen. Der Bereitstellungsförderer kann im Bereich der Abgabe bzw. Übergabe der Fördergüter parallel zum Wegförderer angeordnet sein.

Die Erfindung betrifft im Weiteren ein Verfahren zur Übergabe von Fördergütern mittels eines oben beschriebenen Fördersystems von einem Zuförderer auf, entlang einer Förderbahn bewegten Förderplätze eines Wegförderers.

Erfindungsgemäss wird das Fördergut vom Zuförderer auf die Auflagefläche des Auflageorgans gefördert, so dass dieses diesem flächig aufliegt. Zur Übergabe des mindestens einen Förderguts auf einen unterhalb des Aufnahmeraums vorbei bewegten Förderplatz des Wegförderers wird das Auflageorgan unter Freigabe einer Übergabeöffnung mittels der Bewegungseinrichtung von der Auflageposition seitlich weg und in die Abgabeposition bewegt. Dadurch fällt das mindestens eine Fördergut mittels Schwerkraft durch die frei gegebene Übergabeöffnung auf einen unterhalb des Aufnahmeraums vorbei bewegten Förderplatz des Wegförderers.

Das Fördergut fällt insbesondere ungeführt, und ganz besonders im freien Fall, durch die Übergabeöffnung nach unten, auf einen unterhalb des Aufnahmeraums vorbei bewegten Förderplatz des Wegförderers.

Die Übergabe der Fördergüter erfolgt mittels der Steuerungseinrichtung unter Berücksichtigung der Fallhöhe und der Fallgeschwindigkeit des mindestens einen Fördergutes während der Übergabe sowie unter Berücksichtigung der Position und Fördergeschwindigkeit der Förderplätze des Wegförderers takt-synchron auf unterhalb des Aufnahmeraums vorbei bewegte Förderplätze des Wegförderers.

Bei den Fördergütern handelt es sich um Stückgüter bzw. Einzelgüter, insbesondere von unterschiedlicher Geometrie, Grösse, Gewicht, Haptik und Konsistenz.

Die Stückgüter bzw. Einzelgüter sind insbesondere verpackte Waren, insbesondere einzeln verpackte Waren. Die Stückgüter können Pakete oder Beutelware sein.

Entsprechend werden die Stückgüter bzw. Einzelgüter insbesondere einzeln von der Übergabevorrichtung an den Wegförderer übergeben.

Die Fördergüter sind insbesondere Konsumgüter. Die Fördergüter sind insbesondere Kommissioniergüter.

Die Fördergüter sind insbesondere Liegeware. Liegeware zeichnet sich durch eine liegende Förderung und einer flächigen Auflage der Fördergüter auf dem Förderorgan aus.

Die Fördergüter können flache Fördergüter sein.

Die Fördergüter werden innerhalb des Fördersystems insbesondere in Form von Warenströmen gefördert.

Das Fördersystem bzw. die Übergabevorrichtung dient dabei insbesondere der Verarbeitung von Warenströmen, insbesondere dem Verknüpfen, d.h. Zusammenführen von Warenströmen.

Die Übergabevorrichtung dient dabei ganz besonders der Übergabe von Fördergütern aus dem Warenstrom eines Zuförderers bzw. Bereitstellungsförderers in den Warenstrom eines Wegförderers.

Die Übergabevorrichtung kann auch die Funktion eines Puffers bzw. Zwischenspeichers ausüben, mittels welcher mindestens ein Fördergut bis zur Übergabe an den Wegförderer zwischengespeichert wird.

Die Übergabevorrichtung zeichnet sich insbesondere durch ihren einfachen Aufbau aus vergleichsweise wenigen Komponenten sowie ihre platzsparende Konstruktion auf. So beansprucht die Übergabevorrichtung durch ihre Anordnung oberhalb der Förderbahn des Wegförderers, d.h. durch ihre Anordnung in der dritten Dimension, nur vergleichsweise wenig zusätzliche Stellfläche.

Durch das seitliche Herausbewegen des Auflageorgans aus seiner Auflageposition sowie das seitliche Hineinbewegen in die Auflageposition kann der Abstand des Aufnahmeraums der Übergabevorrichtung zu einem darunter befindlichen Förderplatz des Wegförderers, d.h. die entsprechende Fallhöhe, klein gehalten werden. Dies ermöglicht eine schonende Übergabe der Fördergüter.

Bei einer niedrigen Fallhöhe sind die Fördergüter ferner auch weniger dem Einfluss von Luftbewegungen ausgesetzt. Dadurch ist eine präzisere Übergabe der Fördergüter, insbesondere von leichten Fördergütern möglich.

Eine Minimierung der Fallhöhe ist beispielsweise bei einem Auflageorgan mit Schwenkelementen, welche zur Freigabe der Übergabeöffnung nach unten geschwenkt werden, nicht möglich. Hier erhöht sich die Fallhöhe gegenüber Ausführungsformen mit seitwärts beweglichen Auflageorganen um den Radius der Schwenkelemente, damit diese bei der Freigabe der Übergabeöffnung nicht in den Förderstrom der Fördergüter des Wegförderers hinein schwenken.

Nachfolgend werden besondere Ausführungsformen und Weiterbildungen der Erfindung nochmals aufgeführt:
Das Auflageorgan der Übergabevorrichtung kann in der Auflageposition eine geneigte Auflagefläche aufweisen.

Das Auflageorgan der Übergabevorrichtung kann in der Auflageposition eine in Förderrichtung des Wegförderers geneigte, insbesondere schräg nach unten zu den Förderplätzen des Wegförderers geneigte Auflagefläche aufweisen.

Der Aufnahmeraum der Übergabevorrichtung kann maximal 75 cm und insbesondere maximal 50 cm oberhalb eines sich unterhalb des Aufnahmeraums befindlichen Förderplatzes des Wegförderers angeordnet sein.

Der Zuförderer kann zur Zuführung der Fördergüter an die Übergabevorrichtung mindestens eine Förderkomponente:
- quer zur Förderrichtung des Wegförderers und/oder
- parallel, insbesondere gleichgerichtet, zur Förderrichtung des Wegförderers, aufweisen.

Der Zuförderer kann einen Zwischenförderer, wie Förderrutsche oder Bandförderer, enthalten.

Entlang der Förderbahn des Wegförderers können mehrere Übergabevorrichtungen angeordnet sein.

Das Fördersystem kann eine Steuerungseinrichtung enthalten, welche unter Berücksichtigung der Fallhöhe und der Fallgeschwindigkeit des mindestens einen Fördergutes während der Übergabe sowie unter Berücksichtigung der Position und Fördergeschwindigkeit der Förderplätze des Wegförderers zur takt-synchronen Übergabe von Fördergütern auf unterhalb des Aufnahmeraums vorbei bewegte Förderplätze des Wegförderers ausgelegt ist.

Das Fördersystem kann im Weiteren einen Bereitstellungsförderer, wie Kippschalenförderer oder Taschenförderer, zur Abgabe von Fördergütern an den Zuförderer enthalten.

Entlang der Förderbahn des Wegförderers und in Förderrichtung des Wegförderers vor der Übergabevorrichtung kann eine Sensoreinrichtung zur Erfassung der Belegung bzw. Nichtbelegung der an der Sensoreinrichtung vorbei bewegten Förderplätze des Wegförderers angeordnet sein.

Die Fördergüter können mittels der Steuerungseinrichtung in Abhängigkeit von einem durch die Sensoreinrichtung erfassten freien Förderplatz auf dem Wegförderer vom Übergabeförderer an den Wegförderer abgegeben werden.

Die Fördergüter können, insbesondere in Abhängigkeit von einem durch die Sensoreinrichtung erfassten freien Förderplatz auf dem Wegförderer, von einem Bereitstellungsförderer, wie Kippschalenförderer oder Taschenförderer, an den Zuförderer abgegeben werden.

Nachfolgend wird der Erfindungsgegenstand anhand von Ausführungsbeispielen, welche in den beiliegenden Figuren dargestellt sind näher erläutert. Es zeigen jeweils schematisch:
- Figur 1a:: eine Seitenansicht eines erfindungsgemässen Fördersystems gemäss einer ersten Ausführungsvariante;
- Figur 1b:: eine weitere Seitenansicht des Fördersystems gemäss Figur 1a;
- Figur 1c:: eine weitere Seitenansicht des Fördersystems gemäss Figur 1a und 1b;
- Figur 2:: eine Seitenansicht des Fördersystems gemäss Figur 1a bis 1c mit zwei Übergabevorrichtungen;
- Figur 3:: eine Seitenansicht des Fördersystems gemäss Figur 1a bis 1c mit einem Bereitstellungsförderer;
- Figur 4a:: eine Seitenansicht eines erfindungsgemässen Fördersystems gemäss einer zweiten Ausführungsvariante;
- Figur 4b:: eine weitere Seitenansicht des Fördersystems gemäss Figur 4a;
- Figur 5a:: eine Seitenansicht eines erfindungsgemässen Fördersystems gemäss einer dritten Ausführungsvariante;
- Figur 5b:: eine weitere Seitenansicht des Fördersystems gemäss Figur 5a;
- Figur 6a:: eine Seitenansicht eines erfindungsgemässen Fördersystems gemäss einer vierten Ausführungsvariante;
- Figur 6b:: eine weitere Seitenansicht des Fördersystems gemäss Figur 6a;
- Figur 7a:: eine Seitenansicht eines erfindungsgemässen Fördersystems gemäss einer fünften Ausführungsvariante;
- Figur 7b:: eine weitere Seitenansicht des Fördersystems gemäss Figur 7a;
- Figur 8a:: eine Seitenansicht einer weiteren Ausführungsvariante einer erfindungsgemässen Übergabevorrichtung;
- Figur 8b:: eine Seitenansicht eines erfindungsgemässen Fördersystems gemäss einer sechsten Ausführungsvariante mit einer Übergabevorrichtung gemäss Figur 8a;
- Figur 9a-9c:: Seitenansichten eines weiteren Fördersystems mit einer Übergabevorrichtung gemäss den Figuren 8a-8b.

Grundsätzlich sind in den Figuren gleiche Teile mit gleichen Bezugszeichen versehen.

Für das Verständnis der Erfindung sind gewisse Merkmale in den Figuren nicht oder nur sehr stark abstrahiert dargestellt. Die nachfolgend beschriebenen Ausführungsbeispiele stehen lediglich beispielhaft für den Erfindungsgegenstand.

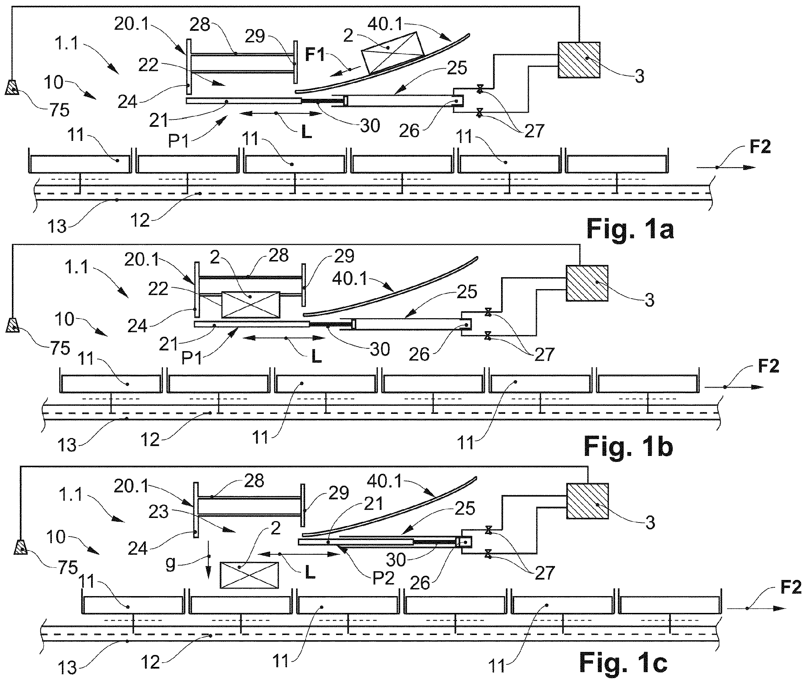

Die **Figur 1** zeigt ein erfindungsgemässes Fördersystem 1.1 mit einem Zuförderer 40.1 in Form einer Förderrutsche, einer Übergabevorrichtung 20.1 und mit einem Wegförderer 10 in Form eines Kippschalenförderers.

Die Übergabevorrichtung 20.1 umfasst ein Auflageorgan 21 in Form eines starren Schieberelementes mit einer horizontalen Auflagefläche für die flächige Auflage eines Fördergutes 2. Oberhalb des Auflageorgans 21 bildet die Übergabevorrichtung 20.1 einen Aufnahmeraum 22 für das Fördergut 2 aus. Entsprechend formt das Auflageorgan 21 eine Begrenzung des Aufnahmeraums 22 nach unten.

Das Auflageorgan 21 ist mit einer Bewegungseinrichtung 25 verbunden, welche einen Pneumatikzylinder 26 umfasst. Das Auflageorgan 21 ist mit dem Zylinderkolben 30 des Pneumatikzylinders 26 gekoppelt. Die Hubbewegung des Zylinderkolbens 30 versetzt das Auflageorgan 21 in eine lineare, horizontale Bewegung. Entsprechend lässt sich das Auflageorgan 21 mittels der Bewegungseinrichtung 25 bzw. dem Pneumatikzylinder 26 zwischen einer Auflageposition P1, in welcher das Fördergut 2 der Auflagefläche des Auflageorgans 21 flächig aufliegt und einer Abgabeposition P2, in welcher das Auflageorgan 21 eine Übergabeöffnung 23 nach unten freigibt, bewegen.

Zur Steuerung des Pneumatik-Zylinders 26 sind entsprechende Ventile 27, wie Verschluss- und Öffnungsventil vorgesehen. Diese werden durch eine Steuerungseinrichtung 3 angesteuert.

Der Aufnahmeraum 22 der Übergabevorrichtung 20.1 ist über der Förderbahn des Wegförderers 10 angeordnet. Der Wegförderer 10 ist ein Kippschalenförderer mit einer Mehrzahl von entlang der Förderbahn hintereinander angeordneten Kippschalen 11. Die Förderschalen 11 sind über eine in einem Führungskanal 13 geführten, angetriebenen Förderkette 12 miteinander verkettet. Entsprechend bewegen sich die Förderschalen 11 synchron miteinander und in gleichbleibenden Abständen zueinander.

Der Kippschalenförderer 10 ist insbesondere ein Kippschalensorter, mittels welchem Fördergüter 2 nach gewissen Kriterien sortiert bzw. verteilt werden. Hierzu werden die Förderschalen 11 des Kippschalensorters 10 durch einen Abgabebereich geführt, in welchem eine Mehrzahl von Abgabestellen entlang der Förderbahn des Kippschalenförderers 10 hintereinander angeordnet sind (nicht gezeigt). Die Fördergüter 2 werden an den Abgabestellen nach bestimmten Sortier- bzw. Verteilkriterien durch Kippen der Förderschalen 11 abgegeben. Ein solcher Kippschalensorter ist beispielsweise in der CH 710 851 A1 beschrieben.

Zur Übergabe eines Fördergutes 2, wird dieses über die Förderrutsche 40.1 mittels Schwerkraft in Förderrichtung F1 zur Übergabevorrichtung 20.1 gefördert. Das Fördergut 2 gleitet durch eine seitlich vom sich in Auflageposition P1 befindlichen Auflageorgan 21 angeordnete Zuführöffnung 29 auf das Auflageorgan 21 und liegt diesem in einer Abgabeposition P1 flächig auf. Damit das Fördergut 2 nicht in Förderrichtung F1 über das Auflageorgan 21 hinaus gleiten kann, enthält die Übergabevorrichtung 20.1 einen der Zuführöffnung gegenüber liegenden Anschlag 24, welcher das auf das Auflageorgan 21 gleitende Fördergut 2 stoppt. Der Aufnahmeraum 22 wird folglich seitlich unter anderem durch die Zuführöffnung 29 sowie den Anschlag 24 begrenzt.

Der Anschlag 24 kann z. B eine Wand oder ein Gitter sein. Der Aufnahmeraum 22 kann grundsätzlich, mit Ausnahme der Zuführöffnung 29, durch Begrenzungselemente bzw. durch eine Einfassung 28, wie Streben, Wände, Gitter seitlich begrenzt sein.

Die Übergabe des Fördergutes 2 an den Wegförderer 10 wird durch die Steuerungseinrichtung 3 gesteuert, welche unter Berücksichtigung der Fallhöhe und der Fallgeschwindigkeit des Fördergutes 2 während der Übergabe sowie unter Berücksichtigung der Position und Fördergeschwindigkeit der Förderschalen 11 des Wegförderers 10 für eine takt-synchrone Übergabe des Fördergutes 2 in eine unterhalb des Aufnahmeraums 22 vorbei bewegte Förderschale 11 des Wegförderers 10 sorgt.

Zur Übergabe des Förderguts 2 wird das Auflageorgan 21 durch Zurückziehen des Zylinderkolbens 30 des Pneumatikzylinders 26 in einer linearen Bewegung L seitlich aus der Auflageposition P1 in die Abgabeposition P2 bewegt. Bei diesem Vorgang wird eine Übergabeöffnung 23 nach unten freigegeben, durch welche das Fördergut 2 ungeführt und im freien Fall durch die Schwerkraft g nach unten auf eine unterhalb des Aufnahmeraums 22 vorbei bewegte Förderschale 11 des Wegförderers 10 fällt.

Nach der Übergabe des Fördergutes 2 an den Wegförderer 10 wird das Auflageorgan 21 mittels einer linearen Gegenbewegung wieder in die Auflageposition P1 zurückbewegt. Ein neues Fördergut 2 kann in den Aufnahmeraum 22 über dem Auflageorgan 21 gefördert werden.

Das Fördersystem 1.1 enthält ferner eine Sensoreinrichtung 75 zur Erfassung der Belegung bzw. Nichtbelegung der an der Sensoreinrichtung 75 vorbei bewegten Förderschalen 11 des Wegförderers 10. Die Sensoreinrichtung 75 ist mit der Steuerungseinrichtung 3 verbunden und weist einen optischen Sensor zum Detektieren von auf den Förderschalen 11 liegenden Fördergütern 2 auf. Die Steuerungseinrichtung 3 steuert die Übergabe der Fördergüter 2 in die Förderschalen 11 des Wegförderers 10 in Abhängigkeit von der durch die Sensoreinrichtung 75 ermittelten Belegung bzw. Nichtbelegung der Förderschalen 11 am Wegförderer 10. So gibt die Steuerungseinrichtung 3 die Freigabe bzw. das Steuersignal zur Übergabe eines Fördergutes 2 von der Übergabevorrichtung 20.1 an den Wegförderer 10 nur, wenn zum Zeitpunkt der Übergabe eine freie Förderschale 11 unterhalb des Aufnahmeraums 22 der Übergabevorrichtung 20.1 vorbei bewegt wird.

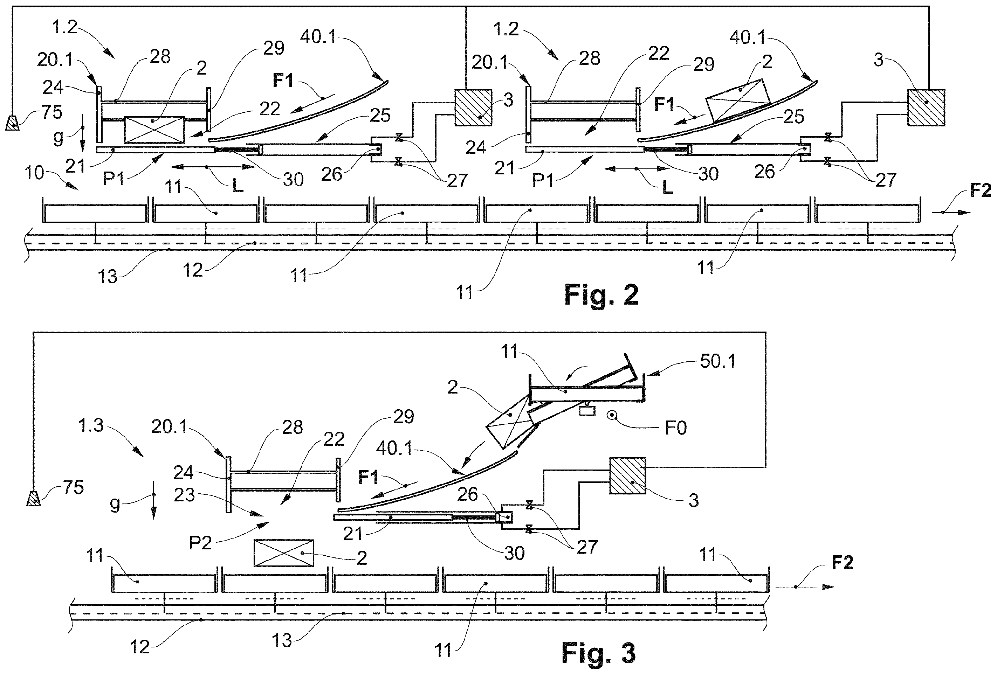

Die **Figur 2** zeigt ein Fördersystem 1.2 wie es bereits im Zusammenhang mit Figur 1 beschrieben wird, jedoch mit dem Unterschied, dass vorliegend entlang der Förderbahn des Wegförderers 10 zwei Übergabevorrichtungen 20.1 hintereinander angeordnet sind. So können beispielsweise mittels der Übergabevorrichtungen 20.1 von verschiedenen Zuförderern bzw. Bereitstellungsförderer (nicht gezeigt) Fördergüter 2 an die Förderschalen 11 des Wegförderers 10 übergeben werden.

Die **Figur 3** zeigt ein Fördersystem 1.3 wie es bereits oben im Zusammenhang mit Figur 1 beschrieben wird, jedoch in Kombination mit einem Bereitstellungsförderer 50.1 in Form eines Kippschalenförderers. Der Kippschalenförderer 50.1 enthält analog zum Wegförderer 10 gemäss den Figuren 1a bis 1c eine Mehrzahl von über eine angetrieben Förderkette 12 miteinander verbundene Förderschalen 11. Die Förderkette 12 ist in einem Führungskanal 13 geführt. Die zu übergebenden Fördergüter 2 werden vom Kippschalenförderer 50.1 durch seitliches Kippen der Förderschalen 11 an den Rutschförderer 40.1 abgegeben. Das Fördergut 2 rutscht hierbei von der zur Seite gekippten Förderschale 11 auf die Förderrutsche 40.1 und von dort in die Übergabevorrichtung 20.1.

Die Förderrichtung F0 des Bereitstellungsförderers 50.1 verläuft im Bereich der Abgabe der Fördergüter 2 quer zur Förderrichtung F2 des Wegförderers 10.

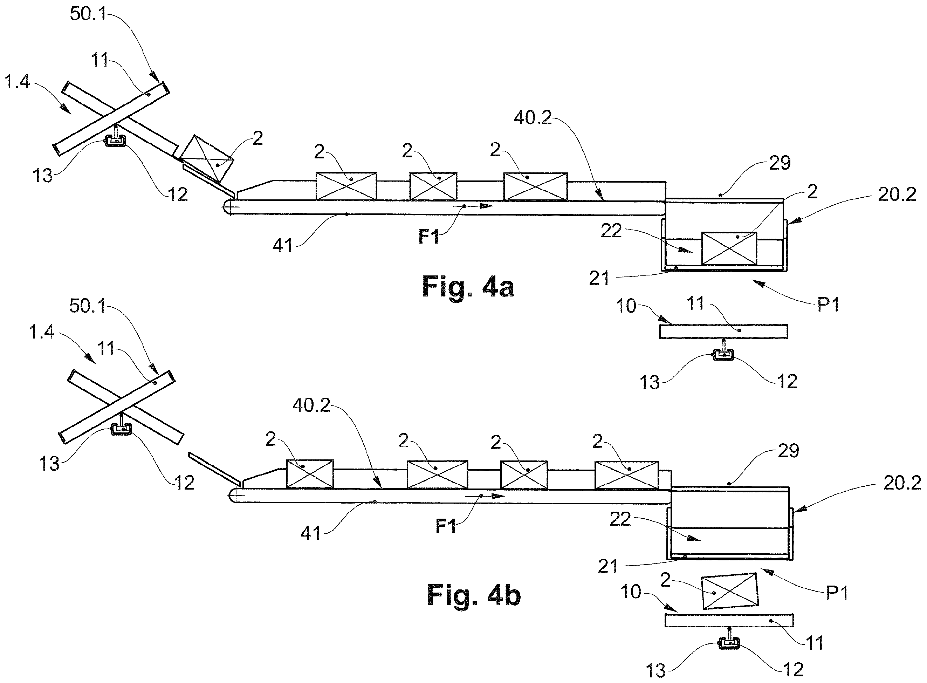

Die **Figuren 4a und 4b** zeigen eine weitere Ausführungsvariante eines erfindungsgemässen Fördersystems 1.4. Das Fördersystem 1.4 enthält einen Bereitstellungsförderer 50.1 wie er bereits im Zusammenhang mit Figur 3 beschrieben wird. Die Fördergüter 2 werden gemäss dieser Ausführungsvariante über eine Rutsche an einen Zuförderer 40.2 in Form eines Bandförderers abgegeben. Der Bandförderer 40.2 umfasst ein Förderband 41, welches die auf diesem aufliegenden Fördergüter 2 in Förderrichtung F1 zur Übergabevorrichtung 20.2 fördert.

Die Übergabevorrichtung 20.2 entspricht im Wesentlichen der bereits in den Figuren 1a bis 1c beschriebenen Übergabevorrichtung 20.1, jedoch mit dem Unterschied, dass die Zuführöffnung 29 nicht seitlich vom Auflageorgan 21, sondern über dem Auflageorgan 21 angeordnet ist. Das Fördergut 2 wird ebenfalls seitlich, d.h. von der Seite, der Übergabevorrichtung 20.2 zugefördert, wobei das Fördergut 2 am Ende des Förderbandes 41 schwerkraftbedingt durch die über dem Auflageorgan 21 angeordnete Zuführöffnung 29 nach unten in den Aufnahmeraum 22 und folglich auf das Auflageorgan 21 fällt und diesem flächig aufliegt.

Durch Freigeben der Übergabeöffnung 23 nach unten mittels der Steuerungseinrichtung 3, wie dies im Zusammenhang mit den Figuren 1a bis 1c ausführlich beschrieben ist, fällt das Fördergut 2 auf eine unterhalb des Aufnahmeraums 22 vorbei geförderte Förderschale 11 des Wegförderers 10. Der Wegförderer 10 ist ebenfalls bereits im Zusammenhang mit den Figuren 1a bis 1c weiter oben beschrieben.

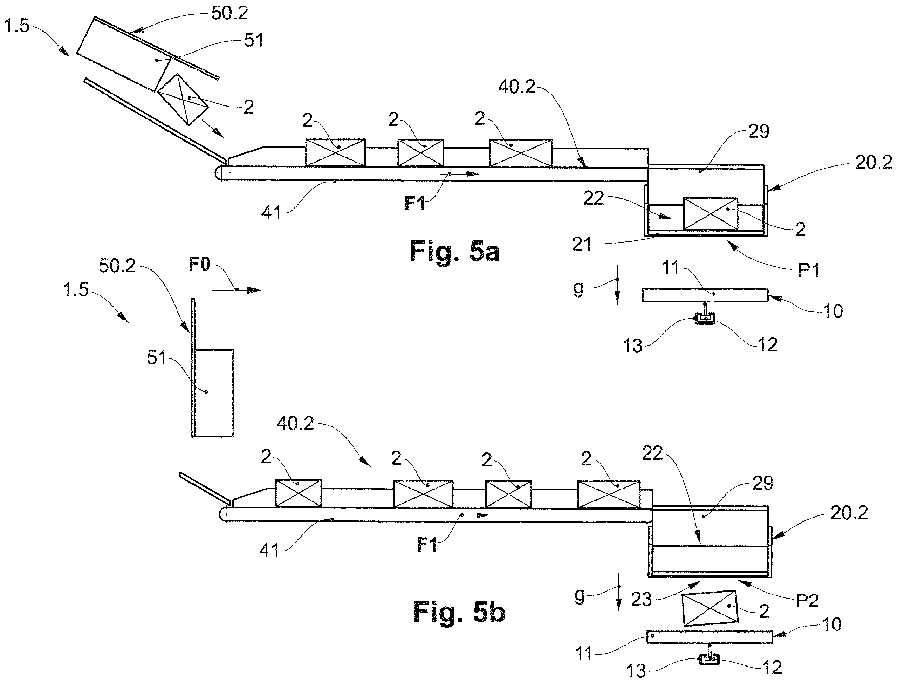

Die **Figuren 5a und 5b** zeigen eine weitere Ausführungsvariante eines erfindungsgemässen Fördersystems 1.5. Das Fördersystem 1.5 entspricht im Wesentlichen dem Fördersystem 1.4 gemäss den Figuren 4a und 4b, jedoch mit dem Unterschied, dass der Bereitstellungsförderer 50.2 ein Taschenförderer mit Fördertaschen 51 ist.

Zur Abgabe der Fördergüter 2 aus den Fördertaschen 51, werden die Fördertaschen 51 an der Abgabestelle über eine Kulissenführung (nicht gezeigt) «kopfüber» gekippt, so dass der Taschenboden angehoben ist und die Taschenöffnung nach unten weist und das Fördergut 2 schwerkraftbedingt aus der Fördertasche 51 gleiten und weiter über eine Rutsche auf das Förderband 41 des Zuförderers 40.2 gleiten kann. Das Entleeren der Fördertaschen eines Taschenförderers wird beispielsweise in den Publikationsschriften CH 713 082 A1 und CH 713 398 A1 beschrieben.

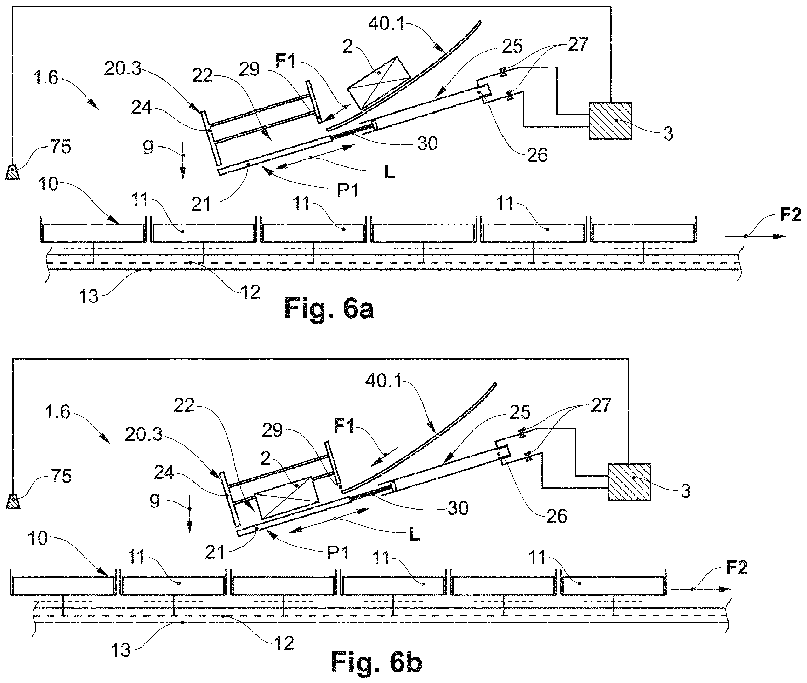

Die **Figuren 6a und 6b** zeigen eine weitere Ausführungsvariante eines erfindungsgemässen Fördersystems 1.6. Das Fördersystem 1.6 entspricht im Wesentlichen dem Fördersystem 1.1 gemäss den Figuren 1a bis 1c, jedoch mit dem Unterschied, dass die Auflagefläche des Auflageorgans 21 geneigt ist. Gemäss dieser Ausführungsvariante ist die Auflagefläche des Auflageorgans 21 entgegen der Förderrichtung F2 des Wegförderers 10 nach unten zu den Förderschalen 11 hin geneigt. Dadurch trifft das durch die freigegebene Übergabeöffnung 23 nach unten auf die Förderschale 11 des Wegförderers 10 fallende Fördergut 2 zuerst mit dem hinteren Abschnitt auf der Förderschale 11 auf und legt sich erst im Anschluss daran flächig auf die Förderschale 11. Dadurch wird verhindert, dass das Fördergut 2 mit einer Flächenseite flächig auf die Förderschale 11 auftrifft, wie dies beispielsweise bei einem Auflageorgan mit einer horizontalen Auflagefläche der Fall ist.

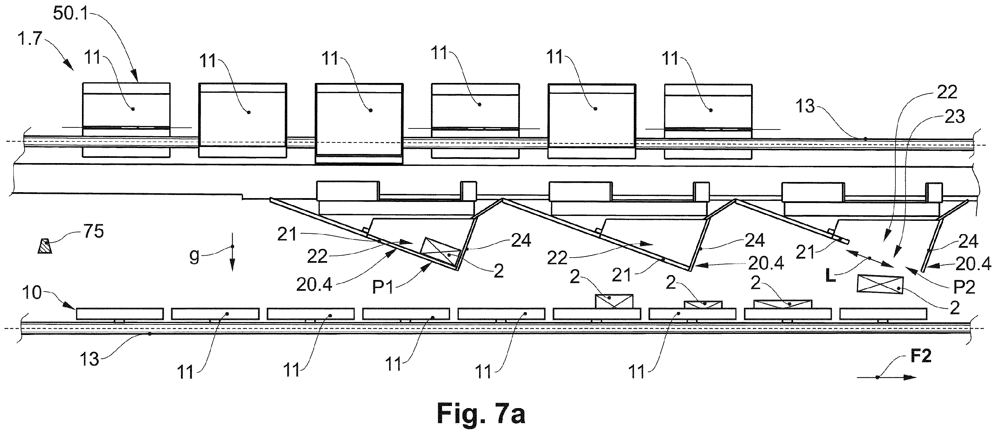

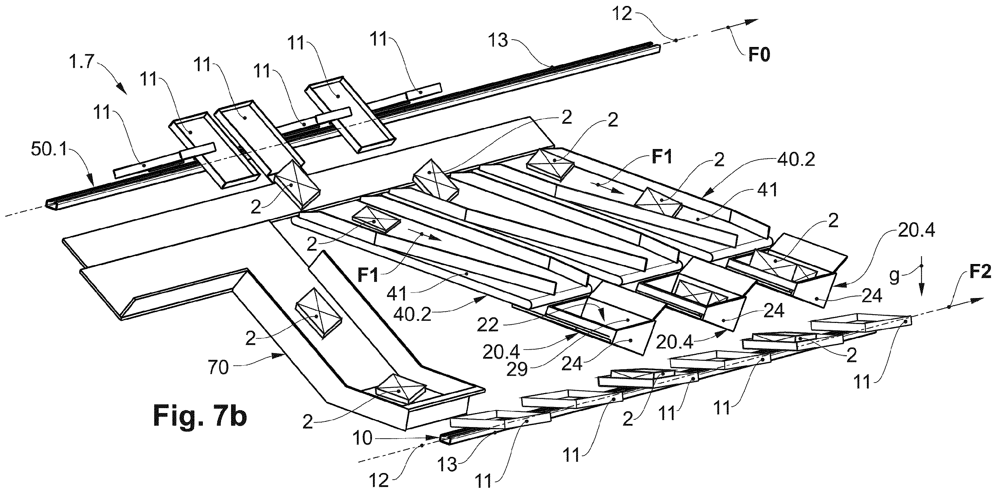

Die Figuren 7a **und** 7b zeigen eine weitere Ausführungsvariante eines erfindungsgemässen Fördersystems 1.7. Das Fördersystem 1.7 entspricht im Grundaufbau dem Fördersystem 1.4 gemäss den Figuren 4a bis 4b. Gemäss dieser Ausführungsvariante werden die Fördergüter 2 ebenfalls von einem Bereitstellungsförderer 50.1 in Form eines Kippschalenförderers über eine Rutsche an einen Zuförderer 40.2 in Form eines Bandförderers mit Förderband 41 abgegeben und in Förderrichtung F1 der Übergabevorrichtung 20.4 seitlich zugeführt und über eine über dem Auflageorgan 21 angeordnete Zuführöffnung 29 in den Aufnahmeraum 22 der Übergabevorrichtung 20.4 abgegeben.

Die vorliegende Ausführungsvariante unterscheidet sich jedoch von jener gemäss Figur 4a und 4b durch eine geneigte Auflagefläche des Auflageorgans 21, welche vorliegend in Förderrichtung F2 des Wegförderers 10 nach unten zu den Förderschalen 11 des Wegförderers 10 hin geneigt ist. Ferner ist die Auflagefläche des Auflageorgans 21 auch quer zur Förderrichtung F2 geneigt, wobei die Neigung in Zuführrichtung F1 schräg nach unten weist.

Dadurch trifft das durch die freigegebene Übergabeöffnung 23 nach unten auf die Förderschale 11 des Wegförderers 10 fallende Fördergut 2 zuerst mit einem vorderen Eckbereich auf der Förderschale 11 auf und legt sich erst im Anschluss daran flächig auf die Förderschale 11.

Alternativ kann die Auflagefläche des Auflageorgans quer zur Förderrichtung des Wegförderers auch horizontal ausgerichtet sein. Dadurch trifft das durch die freigegebene Übergabeöffnung nach unten auf die Förderschale des Wegförderers fallende Fördergut zuerst mit dem vorderen Abschnitt auf der Förderschale auf und legt sich erst im Anschluss daran flächig auf die Förderschale.

In beiden Fällen wird auch hier verhindert, dass das Fördergut 2 mit einer Flächenseite flächig auf die Förderschale 11 auftrifft, wie dies beispielsweise bei einem Auflageorgan mit einer horizontalen Auflagefläche der Fall ist.

Gemäss vorliegender Ausführungsvariante sind entlang der Förderbahn des Wegförderers 10 drei Übergabevorrichtungen 20.4 mit entsprechenden Zuförderern 40.2 angeordnet. Diese erhöhen die Übergabekapazität vom dem einen Bereitstellungsförderer 50.1 an den Wegförderer 10.

Es kann allerdings auch vorgesehen sein, dass die Übergabevorrichtungen 20.4 jeweils von unterschiedlichen Bereitstellungsförderern mit Fördergütern 2 beschickt werden.

Des Weiteren enthält das Fördersystem 1.7 eine Abgabevorrichtung 70 in Form einer Förderrutsche mit einem Auffangfach zum Auffangen und Zurückhalten der vom Bereitstellungsförderer 50.1 an die Abgabevorrichtung 70 abgegebenen Fördergüter 2. Die Abgabevorrichtung 70 dient zur Übergabe von besonders empfindlichen Fördergütern 2 an den Wegförderer 10. Diese Fördergüter 2 können nicht mittels einer Übergabevorrichtung 20.4 übergeben werden, da der freie Fall der Fördergüter 2 von der Übergabevorrichtung 20.4 auf die Förderschalen 11 des Wegförderers die Fördergüter 2 beschädigen bzw. beeinträchtigen würde.

Vielmehr wird ein über die Abgabevorrichtung 70 abgegebenes Fördergut 2 im dazugehörigen Auffangfach zurückbehalten und von Hand auf eine Förderschale 11 des Wegförderers 10 gelegt.

Es ist übrigens denkbar, dass auf der anderen Seite des Bereitstellungsförderers 50.1 eine analoge Anordnung von Zuförderern 40.2 und Übergabevorrichtungen 20.4 sowie eines weiteren Wegförderers 10 angeordnet ist, so dass die Förderschalen 11 des Bereitstellungsförderers 50.1 zur Abgabe der Fördergüter 2 wahlweise auf die linke oder rechte Seite gekippt werden können.

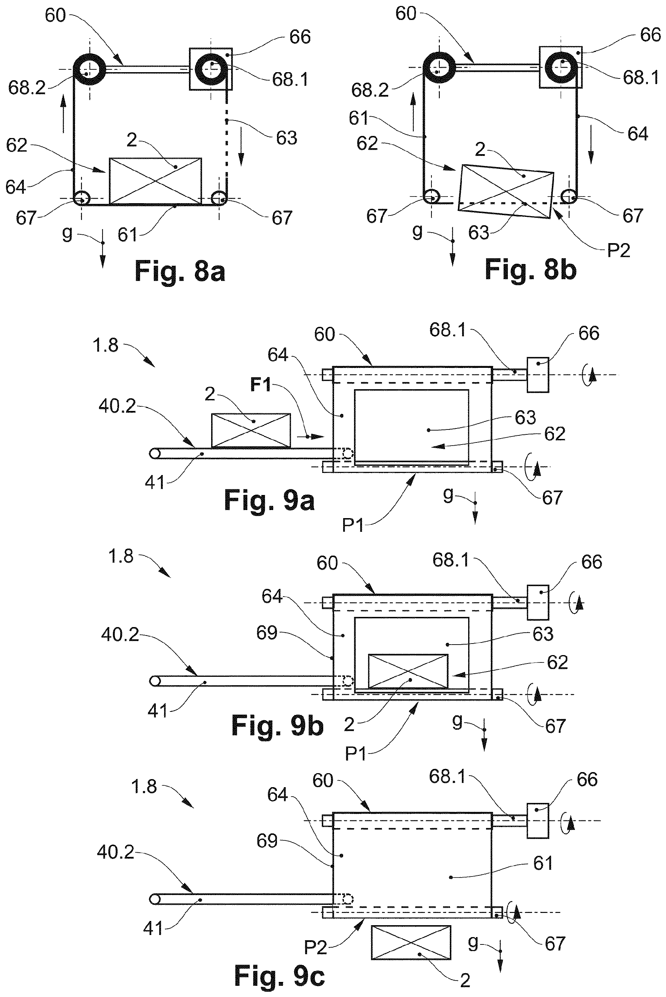

Die **Figuren 8a und 8b** zeigen eine weitere Ausführungsvariante einer Übergabevorrichtung 60, welche sich von den oben beschriebenen Übergabevorrichtungen erheblich unterscheidet.

Das Auflageorgan 61 wird hier durch einen Auflagebandabschnitt eines flexiblen Bandes 64 ausgebildet, welches in der Auflageposition P1 den Aufnahmeraum 62 gegen unten begrenzt. Beidseitig vom Auflagebandabschnitt 61 sind Umlenkrollen 67 zum Umlenken des flexiblen Bandes 64 angeordnet. Das flexible Band 64 ist ausgehend vom Auflagebandabschnitt 61 beidseitig um die Umlenkrollen 67 umgelenkt und zu oberhalb der Umlenkrollen 67 angeordneten Wickelrollen 68.1, 68.2 hochgeführt und an den Wickelrollen 68.1, 68.2 befestigt.

Die Übergabevorrichtung 60 umfasst ferner einen Antrieb 66 zum Antreiben der Wickelrollen 68.1, 68.2. Wickelrollen 68.1, 68.2 und Antrieb 66 sind Teil der Bewegungseinrichtung 65 zum Bewegen des Auflagebandabschnittes 61 zwischen einer Auflageposition P1 und einer Abgabeposition P2.

Das flexible Band 64 umfasst einen weiteren Bandabschnitt, welcher eine Übergabeöffnung 63 ausbildet. Das flexible Band 64 lässt sich nun über den Antrieb 66 zwischen einer ersten Wickelrolle 68.1 und einer zweiten Wickelrolle 68.2 in beide Richtungen ab- und aufwickeln, so dass der Auflagebandabschnitt 61 und folglich auch der Bandabschnitt mit der Abgabeöffnung 63 zwischen einer Auflageposition P1 unterhalb des Aufnahmeraums 62 und einer Abgabeposition P2 seitlich vom Aufnahmeraum 62 bewegt werden kann.

Der Auflagebandabschnitt 61 wird dabei seitlich aus der Auflageposition P1 herausbewegt bzw. seitlich in die Auflageposition P1 hinein bewegt.

Die **Figuren 9a bis 9c** veranschaulichen anhand des Fördersystems 1.8 die Funktionsweise der Übergabevorrichtung 60 noch besser. Über einen als Bandförderer 40.2 ausgebildeten Zuförderer wird ein Fördergut 2 über eine seitliche Zuführöffnung 69 seitlich in den Aufnahmeraum 62 der Übergabevorrichtung 60 und somit auf den Auflagebandabschnitt 61 des flexiblen Bandes 64 gefördert. Die Zuführöffnung 69 ist stirnseitig zum flexiblen Band 64 bzw. zu den Umlenkrollen 67 oder Wickelrollen 68.1, 68.2 angeordnet. Das heisst, die Zuführöffnung 69 ist auf einer der beiden Seiten des Aufnahmeraums 62 angeordnet, welche nicht vom flexiblen Band 64 durchquert wird.

Der Auflagebandabschnitt 61 des flexiblen Bandes 64 befindet sich bei der Aufnahme des Fördergutes 2 in Auflageposition P1 unterhalb des Aufnahmeraums 62, so dass das zugeförderte Fördergut 2 im Aufnahmeraum 62 dem Auflagebandabschnitt 61 flächig aufliegt.

Zur Übergabe des Fördergutes 2 an einen unterhalb des Aufnahmeraums 62 angeordneten Wegförderer 10 (nicht gezeigt), wird der Auflagebandabschnitt 61 seitlich aus der Auflageposition P1 heraus und über die Umlenkrolle 67 in Richtung zweite Wickelrolle 68.2 nach oben bewegt. Ferner wird der Bandabschnitt mit der Übergabeöffnung 63 nach unten und um die Umlenkrolle 67 seitlich in die Abgabeposition P2 unterhalb des Aufnahmeraumes bewegt. Dies geschieht durch Abwickeln eines Bandabschnittes des flexiblen Bandes 64 von der ersten Wickelrolle 68.1 und gleichzeitiges Aufwickeln eines korrespondierenden Bandabschnittes des flexiblen Bandes 64 durch die zweite Wickelrolle 68.1.

Entsprechend kommt der Bandabschnitt mit der Übergabeöffnung 63 unterhalb des Aufnahmeraumes 62 zu liegen, so dass das Fördergut 2 durch die Übergabeöffnung 63 nach unten auf den Wegförderer 10 (nicht gezeigt) fallen kann.

Nach erfolgter Übergabe des Fördergutes 2 wird das flexible Band 64 wieder in die Gegenrichtung bewegt, so dass der Auflagebandabschnitt 61 dieses Mal in Gegenrichtung um die Umlenkrolle 67 wieder seitlich in die Auflageposition P1 unterhalb des Aufnahmeraumes 62 bewegt wird. Gleichzeitig wird der Bandabschnitt mit der Übergabeöffnung 63 wieder aus seiner Abgabeposition unterhalb des Aufnahmeraums 62 seitlich heraus und um die Umlenkrolle nach oben in Richtung erste Wickelrolle 68.1 bewegt. Dies geschieht durch einen erneuten Ab- und Aufwickelvorgang, dieses Mal jedoch in entgegen gesetzter Richtung. Die zuvor abwickelnde, erste Wickelrolle 68.1 ist nun die aufwickelnde Wickelrolle und die zuvor aufwickelnde, zweite Wickelrolle 68.2 ist nun die abwickelnde Wickelrolle 68.

## Patentansprüche

1. **Übergabevorrichtung** (20.1-20.4, 40) zur Übergabe von Fördergütern (2), wie Liegeware, von einem Zuförderer (40.1-40.2) auf Förderplätze (11) eines Wegförderers (10), wobei
die Übergabevorrichtung (20.1-20.4, 40) einen ortsfesten Aufnahmeraum (22, 62) für mindestens ein Fördergut (2) ausbildet, welcher nach unten durch ein bewegbares Auflageorgan (21, 61) begrenzt ist, und die Übergabevorrichtung (20.1-20.4, 40) eine Zuführöffnung (29, 69) zur seitlichen Zuführung des Fördergutes (2) in den Aufnahmeraum (22, 62) der Übergabevorrichtung (20.1-20.4, 40) sowie einen der Zuführöffnung (29, 69) gegenüberliegenden Anschlag (24) zum Stoppen des auf das Auflageorgan (21, 61) geförderten Förderguts (2) aufweist,
**dadurch gekennzeichnet, dass**
das Auflageorgan (21, 61) mittels einer Bewegungseinrichtung (25) zwischen einer Auflageposition (P1), in welcher das mindestens eine Fördergut (2) dem Auflageorgan (21, 61) flächig aufliegen kann und einer Abgabeposition (P2), in welcher das Fördergut (2) mittels Schwerkraft (g) durch eine vom Auflageorgan nach unten frei gegebene Übergabeöffnung (23, 63) nach unten, auf einen unterhalb des Aufnahmeraums (22, 62) vorbei bewegten Förderplatz (11) des Wegförderers (10) fallen kann, bewegbar ist.

2. Übergabevorrichtung nach Anspruch 1, **dadurch gekennzeichnet, dass** das Auflageorgan (21, 61) zwischen der Auflageposition (P1) und der Abgabeposition (P2) linear bewegbar ist.

3. Übergabevorrichtung nach Anspruch 1 oder 2, **dadurch gekennzeichnet, dass** das Auflageorgan (21, 61) seitlich aus der Auflageposition (P1) heraus und wieder seitlich in die Auflageposition (P1) hinein bewegbar ist.

4. Übergabevorrichtung nach einem der Ansprüche 1 bis 3, **dadurch gekennzeichnet, dass** das Auflageorgan (21) ein Schieberelement ist.

5. Übergabevorrichtung nach einem der Ansprüche 1 bis 3, **dadurch gekennzeichnet, dass** das Auflageorgan (61) ein flexibles Band mit einem Bandabschnitt (64) ist, welcher eine Auflagefläche für das Fördergut (2) ausbildet.

6. Übergabevorrichtung nach einem der Ansprüche 1 bis 5, **dadurch gekennzeichnet, dass** die Bewegungseinrichtung (25) mindestens einen mittels einer Steuerungseinrichtung (3) ansteuerbaren Linearantrieb, wie Pneumatikzylinder (26), zur Ausführung der linearen Bewegung des Auflageorgans (21) umfasst.

7. Übergabevorrichtung nach einem der Ansprüche 1 bis 6, **dadurch gekennzeichnet, dass** die Übergabevorrichtung (20.1-20.4, 40) eine Zuführöffnung (29, 69) zur seitlichen Zuführung des mindestens einen Fördergutes (2) zur Übergabevorrichtung (20.1-20.4, 40), insbesondere zum seitlichen Aufgleiten des mindestens einen Fördergutes (2) auf das Auflageorgan (21, 61) aufweist.

8. Übergabevorrichtung nach einem der Ansprüche 1 bis 7, **dadurch gekennzeichnet, dass** die Zuführöffnung (29, 69) seitlich des sich in Auflageposition (P1) befindlichen Auflageorgans (21, 61) angeordnet ist, und die Übergabevorrichtung (20.1, 20.3, 40) insbesondere einen der Zuführöffnung (29, 69) gegenüberliegenden Anschlag (24) zum Stoppen des auf das Auflageorgan (21, 61) geförderten, mindestens einen Förderguts (2) aufweist.

9. Übergabevorrichtung nach einem der Ansprüche 1 bis 7, **dadurch gekennzeichnet, dass** die Zuführöffnung (29, 69) über dem sich in Auflageposition (P1) befindlichen Auflageorgan (21, 61) angeordnet ist.

10. **Fördersystem** (1.1-1.8) enthaltend einen Zuförderer (40.1-40.2), einen Wegförderer (10) mit einer Mehrzahl von entlang einer Förderbahn bewegbaren Förderplätzen (11) sowie enthaltend eine Übergabevorrichtung (20.1-20.4, 40) zur Übergabe von Fördergütern (2) vom Zuförderer (40.1-40.2) auf Förderplätze (11) des Wegförderers (10) nach einem der Ansprüche 1 bis 9,
**dadurch gekennzeichnet, dass**
der Aufnahmeraum (22, 62) der Übergabevorrichtung (20.1-20.4, 40) über der Förderbahn des Wegförderers (10) angeordnet ist, so dass das Fördergut (2) in der Abgabeposition (P2) mittels Schwerkraft durch die frei gegebene Übergabeöffnung (23, 63) nach unten, auf einen unterhalb des Aufnahmeraums (22, 62) vorbei bewegten Förderplatz (11) des Wegförderers (10) fallen kann.

11. Fördersystem nach Anspruch 10, **dadurch gekennzeichnet, dass** der Wegförderer (10) ein Förderer der folgenden Art ist:
- Schalenförderer, wie Kippschalenförderer;
- Quergurtförderer, oder
- Schuhförderer.

12. Fördersystem nach einem der Ansprüche 10 bis 11, **dadurch gekennzeichnet, dass** der Zuförderer (40.1-40.2) zur seitlichen Zuführung der Fördergüter (2) an die Übergabevorrichtung (20.1-20.4, 40) ausgelegt ist.

13. Fördersystem nach einem der Ansprüche 10 bis 12, **dadurch gekennzeichnet, dass** das Fördersystem (1.1-1.8) ein Sortiersystem zur gezielten Verteilung von Fördergütern (2) und der Wegförderer (10) ein Sorter ist.

14. **Verfahren** zur Übergabe von Fördergütern (2) mittels eines Fördersystems (1.1-1.8) gemäss den Ansprüchen 10 bis 13 von einem Zuförderer (40.1-40.2) auf, entlang einer Förderbahn bewegte Förderplätze (11) eines Wegförderers (10),
**dadurch gekennzeichnet, dass**
mindestens ein Fördergut (2) vom Zuförderer (40.1-40.2) auf die Auflagefläche des Auflageorgans (21, 61) gefördert wird und diesem flächig aufliegt, und zur Übergabe des mindestens einen Förderguts (2) auf einen unterhalb des Aufnahmeraums (22, 62) vorbei bewegten Förderplatz (11) des Wegförderers (10) das Auflageorgan (21, 61) unter Freigabe einer Übergabeöffnung (23, 63) mittels der Bewegungseinrichtung (25) von der Auflageposition (P1) seitlich weg und in die Abgabeposition (P2) bewegt wird, und das mindestens eine Fördergut (2) mittels Schwerkraft durch die freigegebene Übergabeöffnung (23, 63) auf einen unterhalb des Aufnahmeraums (22, 62) vorbei bewegten Förderplatz (11) des Wegförderers (10) fällt.

15. Verfahren nach Anspruch 14, **dadurch gekennzeichnet, dass** mittels der Steuerungseinrichtung (3) unter Berücksichtigung der Fallhöhe und der Fallgeschwindigkeit des mindestens einen Fördergutes (2) während der Übergabe sowie unter Berücksichtigung der Position und Fördergeschwindigkeit der Förderplätze (11) des Wegförderers (10) eine takt-synchrone Übergabe der Fördergüter (2) auf unterhalb des Aufnahmeraums (22, 62) vorbei bewegte Förderplätze (11) des Wegförderers (10) erfolgt.

## Claims

1. A **transfer device** (20.1-20.4, 40) for transferring items (2) to be conveyed, such as lying goods, from a feed conveyor (40.1-40.2) to conveyor spaces (11) of an onward conveyor (10), wherein the transfer device (20.1-20.4, 40) forms a stationary receiving space (22, 62) for at least one item (2) to be conveyed, the receiving space being delimited at the bottom by a movable support element (21, 61), and the transfer device (20.1-20.4, 40) has a feed opening (29. 69) for lateral feeding the item (2) to be conveyed into the receiving space (22, 62) of the transfer device (20.1-20.4, 40) as well a stop element (24) opposite the feed opening (29, 69) for stopping the item (2) to be conveyed being conveyed onto the support element (21, 61).
**Characterized in that**
the support element (21, 61) being movable by means of a displacing device (25) between a support position (P1), in which the at least one item (2) to be conveyed can lie flat on the support element (21, 61), and a delivery position (P2), in which the item (2) to be conveyed can fall down by means of gravity (g) through a transfer opening (23, 63), which is released downwards by the support element (21, 61), onto a conveyor space (11) of the onward conveyor (10) that has been displaced past below the receiving space (22, 62),

2. The transfer device according to claim 1, **characterized in that** the support element (21, 61) can be displaced linearly between the support position (P1) and the delivery position (P2).

3. The transfer device according to claim 1 or 2, **characterized in that** the support element (21, 61) can be displaced laterally out of the support position (P1) and laterally back into the support position (P1).

4. The transfer device according to any one of claims 1 to 3, **characterized in that** the support element (21) is a slide element.

5. The transfer device according to any one of claims 1 to 3, **characterized in that** the support element (61) is a flexible belt having a belt section (64) forming a support surface for the item (2) to be conveyed.

6. The transfer device according to any one of claims 1 to 5, **characterized in that** the displacing device (25) comprises at least one linear drive, such as a pneumatic cylinder (26), which can be activated by means of a control device (3), for executing the linear movement of the support element (21).

7. The transfer device according to any one of claims 1 to 6, **characterized in that** the transfer device (20.1-20.4, 40) has a feed opening (29, 69) for laterally feeding the at least one item (2) to be conveyed to the transfer device (20.1-20.4, 40), in particular for sliding the at least one item (2) to be conveyed laterally onto the support element (21, 61).

8. The transfer device according to any one of claims 1 to 7, **characterized in that** the feed opening (29, 69) is arranged to the side of the support element (21, 61) in the support position (P1), and the transfer device (20.1, 20.3, 40) in particular has a stop (24) opposite the feed opening (29, 69) for stopping the at least one item (2) to be conveyed and being conveyed onto the support element (21, 61).

9. The transfer device according to any one of claims 1 to 7, **characterized in that** the feed opening (29, 69) is arranged above the support element (21, 61) located in the support position (P1).

10. A **conveyor system** (1.1-1.8) containing a feed conveyor (40.1-40.2), an onward conveyor (10) having a plurality of conveyor spaces (11) that can be displaced along a conveyor track and containing a transfer device (20.1-20.4, 40) for transferring items (2) to be conveyed from the feed conveyor (40.1-40.2) to conveyor spaces (11) of the onward conveyor (10) according to any one of claims 1 to 9,
**characterized in that**
the receiving space (22, 62) of the transfer device (20.1-20.4, 40) is arranged above the conveying track of the onward conveyor (10), so that the item (2) to be conveyed, in the delivery position (P2), can fall by means of gravity through the released transfer opening (23, 63) downwards onto a conveyor space (11) of the onward conveyor (10) that has been displaced past below the receiving space (22, 62).

11. The conveyor system according to claim 10, **characterized in that** the onward conveyor (10) is a conveyor of the following type:
- tray conveyor, such as tilt tray conveyor;
- cross-belt conveyor, or
- shoe conveyor.

12. The conveyor system according to any one of claims 10 to 11, **characterized in that** the feed conveyor (40.1-40.2) is designed for laterally feeding the items (2) to be conveyed to the transfer device (20.1-20.4, 40).

13. The conveyor system according to any one of claims 10 to 12, **characterized in that** the conveyor system (1.1-1.8) is a sorting system for the targeted distribution of items (2) to be conveyed and the onward conveyor (10) is a sorter.

14. A **method** for transferring items (2) to be conveyed by means of a conveyor system (1.1-1.8) according to claims 10 to 13 from a feed conveyor (40.1-40.2) to conveyor spaces (11) of an onward conveyor (10) which are displaced along a conveyor track,
**characterized in that**
at least one item (2) to be conveyed is conveyed by the feed conveyor (40.1-40.2) onto the support surface of the support element (21, 61) and lies flat thereon, and to transfer the at least one item (2) to be conveyed to a conveyor space (11) of the onward conveyor (10) that is displaced past below the receiving space (22, 62), the support element (21, 61) is displaced laterally away from the support position (P1) and into the delivery position (P2) by means of the displacing device (25), releasing a transfer opening (23, 63), and the at least one item (2) to be conveyed falls by means of gravity through the released transfer opening (23, 63) onto a conveyor space (11) of the onward conveyor (10) that is displaced past below the receiving space (22, 62).

15. The method according to claim 14, **characterized in that** by means of the control device (3), taking into account the fall height and the fall speed of the at least one item (2) to be conveyed during the transfer and taking into account the position and conveying speed of the conveyor spaces (11) of the onward conveyor (10), there is a clock-synchronous transfer of the items (2) to be conveyed to conveyor spaces (11) of the onward conveyor (10) that are displaced past below the receiving space (22, 62).

## Revendications

1. Dispositif de transfert (20.1-20.4, 40) pour le transfert de produits à transporter (2), tels que des produits couchés, d'un convoyeur d'amenée (40.1-40.2) à des emplacements de transport (11) d'un convoyeur d'évacuation (10), le dispositif de transfert (20.1-20.4, 40) formant un espace de réception (22, 62) fixe pour au moins un produit à transporter (2), lequel est limité vers le bas par un organe de support (21, 61) mobile, et le dispositif de transfert (20.1-20.4, 40) présente une ouverture d'alimentation (29, 69) pour l'amenée latérale du produit à transporter (2) dans l'espace de réception (22, 62) du dispositif de transfert (20.1-20.4, 40) ainsi qu'une butée (24) opposée à l'ouverture d'alimentation (29, 69) pour arrêter le produit à transporter (2) transporté sur l'organe de support (21, 61),
**caractérisé en ce que**
l'organe d'appui (21, 61) peut être déplacé au moyen d'un dispositif de déplacement (25) entre une position de support (P1), dans laquelle le au moins un produit à transporter (2) peut reposer à plat sur l'organe de support (21, 61), et une position de distribution (P2), dans laquelle le produit à transporter (2) peut tomber par gravité (g) à travers une ouverture de transfert (23, 63) libérée vers le bas par l'organe de support, sur un emplacement de transport (11) du convoyeur d'évacuation (10) déplacé au-dessous de l'espace de réception (22, 62).

2. Dispositif de transfert selon la revendication 1, **caractérisé en ce que** l'organe de support (21, 61) est mobile linéairement entre la position de support (P1) et la position de distribution (P2).

3. Dispositif de transfert selon la revendication 1 ou 2, **caractérisé en ce que** l'organe de support (21, 61) peut être déplacé latéralement hors de la position de support (P1) et à nouveau latéralement dans la position de support (P1).

4. Dispositif de transfert selon l'une des revendications 1 à 3, **caractérisé en ce que** l'organe de support (21) est un élément coulissant.

5. Dispositif de transfert selon l'une des revendications 1 à 3, **caractérisé en ce que** l'organe de support (61) est une bande flexible avec un tronçon de bande (64) qui forme une surface de support pour le produit à transporter (2).

6. Dispositif de transfert selon l'une des revendications 1 à 5, **caractérisé en ce que** le dispositif de déplacement (25) comprend au moins un actionneur linéaire, tel qu'un vérin pneumatique (26), pilotable au moyen d'un dispositif de commande (3), pour effectuer le déplacement linéaire de l'organe de support (21).

7. Dispositif de transfert selon l'une des revendications 1 à 6, **caractérisé en ce que** le dispositif de transfert (20.1-20.4, 40) présente une ouverture d'alimentation (29, 69) pour l'alimentation latérale du au moins un produit à transporter (2) vers le dispositif de transfert (20.1-20.4, 40), en particulier pour le glissement latéral du au moins un produit à transporter (2) sur l'organe de support (21, 61).

8. Dispositif de transfert selon l'une des revendications 1 à 7, **caractérisé en ce que** l'ouverture d'alimentation (29, 69) est disposée latéralement par rapport à l'organe de support (21, 61) se trouvant en position de support (P1), et le dispositif de transfert (20.1, 20.3, 40) présente notamment une butée (24) opposée à l'ouverture d'alimentation (29, 69) pour arrêter le au moins un produit à transporter (2) acheminé sur l'organe de support (21, 61).

9. Dispositif de transfert selon l'une des revendications 1 à 7, **caractérisé en ce que** l'ouverture d'alimentation (29, 69) est disposée au-dessus de l'organe de support (21, 61) se trouvant en position de support (P1).

10. Système de transport (1.1-1.8) comprenant un convoyeur d'alimentation (40.1-40.2), un convoyeur d'évacuation (10) avec une pluralité d'emplacements de transport (11) mobiles le long d'une voie de transport, ainsi qu'un dispositif de transfert (20.1-20.4, 40) pour transférer des produits à transporter (2) du convoyeur d'alimentation (40.1-40.2) aux emplacements de transport (11) du convoyeur d'évacuation (10) selon l'une des revendications 1 à 9,
**caractérisé en ce que**
l'espace de réception (22, 62) du dispositif de transfert (20.1-20.4, 40) est disposé au-dessus de la voie de transport du convoyeur d'évacuation (10), de sorte que le produit à transporter (2) peut, dans la position de distribution (P2), tomber par gravité vers le bas à travers l'ouverture de transfert (23, 63) libérée, sur un emplacement de transport (11) du convoyeur d'évacuation (10) déplacé en passant sous l'espace de réception (22, 62).

11. Système de transport selon la revendication 10, **caractérisé en ce que** le convoyeur d'évacuation (10) est un transporteur du type suivant :
- Convoyeurs à plateaux, comme les convoyeurs à plateaux basculants;
- convoyeur transversal, ou
- Convoyeur de chaussures.

12. Système de transport selon l'une des revendications 10 à 11, **caractérisé en ce que** le convoyeur d'alimentation (40.1-40.2) est conçu pour amener latéralement les produits à transporter (2) au dispositif de transfert (20.1-20.4, 40).

13. Système de transport selon l'une des revendications 10 à 12, **caractérisé en ce que** le système de transport (1.1-1.8) est un système de tri pour la répartition ciblée de produits à transporter (2) et le convoyeur d'évacuation (10) est une trieuse.

14. Procédé de transfert de produits à transporter (2) au moyen d'un système de transport (1.1-1.8) selon les revendications 10 à 13, d'un transporteur d'amenée (40.1-40.2) à des emplacements de transport (11) d'un convoyeur d'évacuation (10), déplacés le long d'une voie de transport,
**caractérisé en ce que**
au moins un produit à transporter (2) provenant du convoyeur d'alimentation (40.1-40.2) sur la surface de support de l'organe de support (21, 61) et repose à plat sur celui-ci, et pour le transfert de l'au moins un produit à transporter (2) sur un emplacement de transport (11) du convoyeur d'évacuation (10) déplacé en dessous de l'espace de réception (22, 62), l'organe de support (21, 61) est déplacé vers l'extérieur en libérant une ouverture de transfert (23, 63) est déplacé latéralement au moyen du dispositif de déplacement (25) depuis la position de support (P1) et dans la position de distribution (P2), et l'au moins un produit à transporter (2) tombe par gravité à travers l'ouverture de transfert (23, 63) libérée sur un emplacement de transport (11) du convoyeur d'évacuation (10) déplacé en dessous de l'espace de réception (22, 62).

15. Procédé selon la revendication 14, **caractérisé en ce qu'**au moyen du dispositif de commande (3), en tenant compte de la hauteur de chute et de la vitesse de chute de l'au moins un produit à transporter (2) pendant le transfert ainsi qu'en tenant compte de la position et de la vitesse de transport des emplacements de transport (11) du convoyeur d'évacuation (10), un transfert synchronisé des produits à transporter (2) est effectué sur des emplacements de transport (11) du convoyeur d'évacuation (10) déplacés sous l'espace de réception (22, 62).
